# EUROPÄISCHE PATENTSCHRIFT

(11) **EP 1 319 582 B1**
(45) Veröffentlichungstag und Bekanntmachung des Hinweises auf die Patenterteilung: **01.02.2006**
(21) Anmeldenummer: 02026558.3
(22) Anmeldetag: 28.11.2002
(51) Int. Cl.: B62D 29/00, B62D 25/06, B60R 13/02

(54) **Fahrzeugkarosserieteil in Verbundbauweise**
Vehicle body component having a composite structure
Pièce de carroserie de véhicule d'un mode de construction composite

(30) Priorität: 15.12.2001 DE 10161745
(43) Veröffentlichungstag der Anmeldung: 18.06.2003
(73) Patentinhaber: ArvinMeritor GmbH, 63128 Dietzenbach (DE)
(72) Erfinder: Schönebeck, Horst, 63571 Gelnhausen (DE)
(74) Vertreter: Oppermann, Mark

(56) Entgegenhaltungen:
- EP-A- 0 995 667
- EP-A- 1 095 843
- EP-A- 1 172 282
- DE-U- 20 112 186

## Beschreibung

Die vorliegende Erfindung bezieht sich auf ein Fahrzeugkarosserieteil in Verbundbauweise, insbesondere Fahrzeugdach, entsprechend dem Oberbegriff des Patentanspruchs 1.

Erfindungsgemäß ausgebildete Fahrzeugkarosserieteile in Verbundbauweise, nachfolgend auch Kurz Verbundbauteile genannt, sind grundsätzlich für alle Flächenbereiche von Fahrzeugkarosserien, einschließlich der Hauben, Türen und Klappen/Deckel, geeignet, für die neben einer ausreichenden Beulsteifigkeit und Festigkeit wie Biege- und Torsionsfestigkeit bei geringem Gewicht gute Wärmeund/oder Schallisolationseigenschaften verlangt werden. Wenn nachfolgend von einem Fahrzeugdach die Rede ist, handelt es sich zwar um einen bevorzugten Anwendungsort der Erfindung, jedoch ohne darauf einschränkende Bedeutung.

Im Stand der Technik fehlt es nicht an Vorschlägen, wie Verbundbauteile für Fahrzeugkarosserien auszubilden sind. So offenbart die gattungsbildende EP 0 995 667 A1 der Anmelderin ein Verbundbauteil, insbesondere Fahrzeugdach, das eine tiefgezogene Außenhaut und eine der Innenseite der Außenhaut aufgeschäumte Kunststoffschicht aufweist, wobei letztere auf ihrer Oberfläche mit einem textilen Flächengebilde oder einer dekorativen Kunststoffolie versehen sein kann. Um ein ausreichend steifes und dennoch verhältnismäßig leichtes Verbundbauteil bereitzustellen, ist bei diesem Stand der Technik die tiefgezogene Außenhaut an ihren Rändern rahmenlos ausgebildet und mit einer umlaufenden Aufkantung versehen, wobei die Kunststoffschicht bis zu der Aufkantung reicht und über den gesamten Flächenbereich der Außenhaut mit einer an sich nicht steifen inneren Armierung in Form von bündelweise verdrillten Glasfaserlängenabschnitten versehen ist, durch welche der Elastizitätsmodul der geschäumten Kunststoffschicht erhöht wird.

Dieser Stand der Technik ist insofern verbesserungsbedürftig, als eine eher zu große Menge an Glasfaserlängenabschnitten in die Kunststoffschicht bei deren Ausbildung mit Hilfe des sogenannten LFI-Verfahrens (Long Fiber Injection) eingeschossen werden muß, um die gewünschten Stabilitäts- und Festigkeitseigenschaften des Verbundbauteils mit hinreichender Sicherheit zu erzielen. Auch gestaltet sich eine den jeweiligen Erfordernissen entsprechend gezielte Einstellung der Stabilitäts- und Festigkeitseigenschaften des Verbundbauteils schwierig.

Entsprechendes gilt für das aus der EP 1 101 590 A1 bekannt gewordene Fahrzeug-Karosserieteil in Sandwich-Bauweise, bei dem das verwendete Polyurethan-Schaummaterial Glasfaseranteile enthält, um die Festigkeit der damit ausgebildeten Schaumschicht zu erhöhen.

Weiterhin offenbart die DE 196 32 055 C1 eine Dachversteifung für Fahrzeuge, die von innen an der Dachhaut eines herkömmlichen Fahrzeugdachs angebracht wird. Bei diesem Stand der Technik wird ein planes mehrschichtiges Halbzeug aus zwei äußeren Kraftlinern und einer mittleren Polyurethan-Hartschaumschicht hergestellt, dieses anschließend mittig gespalten und mit Übermaß auf die Abmessungen der Dachhaut zugeschnitten. Ferner wird ein einzelner Kraftliner mit Übermaß auf die Abmessungen der Dachhaut zugeschnitten, worauf der Zuschnitt des gespaltenen Halbzeugs und der Zuschnitt des einzelnen Kraftliners zusammen mit einer Klebeschicht zwischen der Seite der Hartschaumschicht und dem einzelnen Kraftliner in einem der Wölbung und Kontur der Dachhaut entsprechenden Formwerkzeug auf die endgültige Form umgeformt und verklebt werden. Schließlich wird die so ausgebildete Dachversteifung mit der Dachhaut des Fahrzeugdachs verklebt.

Auch bei diesem verhältnismäßig aufwendigen Vorgehen bei der Aussteifung der Dachhaut eines Fahrzeugdachs ist es schwierig, in der Massenfertigung jedes Fahrzeugdach mit den gleichen Stabilitäts- und Festigkeitseigenschaften auszustatten, die u.a. von der Genauigkeit der Spaltung des mehrschichtigen Halbzeugs und der variierenden Qualität der Klebeverbindungen abhängt, so daß insofern in der Praxis stets eine Überdimensionierung der Dachversteifung im Hinblick auf die erforderlichen Stabilitäts- und Festigkeitseigenschaften des Fahrzeugdachs erfolgen muß.

Schließlich wird zum technologischen Hintergrund noch auf die DE 199 56 930 A1 verwiesen, der ein Fahrzeug-Außenhautteil zu entnehmen ist, das eine außenseitige thermoplastische Lack- oder Dekorfolie und ein inneres, dem Außenhautteil die benötigte Stabilität bzw. Steifigkeit verleihendes Trägerteil aus Metall oder Kunststoff aufweist, wobei direkt an die Rückseite der Lack- oder Dekorfolie angrenzend eine zumindest geringfügig elastisch verformbare Kunststoff-Schaumschicht vorgesehen ist, die in einem Hinterschäumwerkzeug auf die Folien-Rückseite aufgebracht wurde, um neben einer qualitativ hochwertigen Außenoberfläche zugleich einen Schutz für eine Person bereitzustellen, die unfallbedingt auf das Außenhautteil auftrifft.

Der Erfindung liegt ausgehend vom Stand der Technik gemäß der EP 0 995 667 A1 die Aufgabe zugrunde, ein möglichst einfach in der Massenfertigung herstellbares Fahrzeugkarosserieteil in Verbundbauweise zu schaffen, dessen Stabilitäts- und Festigkeitseigenschaften bei der Herstellung definiert einstellbar sind.

Diese Aufgabe wird durch die im Patentanspruch 1 angegebenen Merkmale gelöst. Vorteilhafte und/oder zweckmäßige Weiterbildungen der Erfindung sind Gegenstand der Patentansprüche 2 bis 23.

Erfindungsgemäß ist bei einem Fahrzeugkarosserieteil in Verbundbauweise, insbesondere Fahrzeugdach, das eine feste Außenhaut und eine der Innenseite der Außenhaut in einer Schäumform aufgeschäumte Kunststoffschicht aufweist, an der Innenseite der Kunststoffschicht eine Verstärkungsschicht mit angeschäumt, die schon in der Schäumform von der Außenhaut mittels eines zwischen die Verstärkungsschicht und die Außenhaut eingefügten Abstandshalters definiert beabstandet gehalten ist, der vom Kunststoff der Kunststoffschicht durchdrungen ist.

Somit kann das Verbundbauteil leicht den jeweiligen Stabilitäts- und Festigkeitserfordernissen entsprechend hergestellt werden, wobei sich durch die definierte Beabstandung der Verstärkungsschicht von der Außenhaut die Stabilitäts- und Festigkeitskenngrößen wie die Widerstandsmomente bei Biegung bzw. Torsion gezielt einstellen lassen, ohne daß eine starke Überdimensionierung des Verbundbauteils erfolgen müßte und/oder aufwendige zusätzliche Profilelemente für Rahmen und Streben zur Aussteifung vorgesehen werden müßten. Im Ergebnis erhält das Verbundbauteil aufgrund des Zusammenwirkens der Außenhaut mit der damit über die Kunststoffschicht verbundenen und zur Außenhaut definiert beabstandeten Verstärkungsschicht eine Beulsteifigkeit und Gesamtfestigkeit, die allen Anforderungen an die Formstabilität des Verbundbauteils bei allen Betriebsbeanspruchungen des Fahrzeugs genügt. Bei einem Einsatz des erfindungsgemäßen Verbundbauteils für ein Fahrzeugdachmodul bringt dieser Aufbau neben Kosten- und Gewichtsvorteilen u.a. auch den Vorteil mit sich, daß der Fahrzeuginnenraum im Hinblick auf eine maximale Kopffreiheit optimiert werden kann.

Dadurch, daß die Verstärkungsschicht von der Außenhaut mittels eines zwischen die Verstärkungsschicht und die Außenhaut eingefügten Abstandshalters definiert beabstandet gehalten ist, der im fertigen Zustand des Verbundbauteils einen integralen Bestandteil desselben darstellt, bedarf es bei dem Schäumvorgang nur eines geringen Aufwands. Auch der Umstand, daß dabei der Abstandshalter vom Kunststoff der Kunststoffschicht durchdrungen wird, ist schließlich einer hohen Strukturfestigkeit und Formstabilität des Verbundbauteils förderlich.

Nach der Lehre des Patentanspruchs 2 ist der Abstandshalter wenigstens vor dem Aufschäumen der Kunststoffschicht unter Aufbringung einer vorbestimmten Kraft zumindest partiell verformbar. Somit kann der Abstandshalter u.a. leicht im Hinblick auf den gewünschten Abstand zwischen Außenhaut und Verstärkungsschicht komprimiert und auch der gewünschten, z.B. gekrümmten Form des Verbundbauteils angepaßt werden, ohne daß es dazu einer aufwendigen formgebenden Bearbeitung des Abstandshalters bedürfte.

Prinzipiell kann für den Abstandshalter jedes Material eingesetzt werden, welches ein geringes Gewicht mit einer gewissen Formstabilität bzw. Eigensteife zu kombinieren vermag, die ausreichend ist, beim Schäumvorgang den vorbestimmten Abstand zwischen Außenhaut und Verstärkungsschicht zu halten. Insbesondere aus Kostengründen bevorzugt ist es jedoch, wenn der Abstandshalter aus einer Schaumkunststoffmatte besteht, deren offene Zellstruktur entsprechend dem Patentanspruch 3 ein unregelmäßiges Raumgitter ausbildet, welches sich der Form der Außenhaut bis in deren Randbereiche hinein anpassen und von dem aufschäumenden Kunststoff in der geschlossenen Schäumform durchdrungen und umhüllt werden kann. Gemäß dem Patentanspruch 4 kann es sich bei dem Schaumkunststoff des Abstandshalters zweckmäßig um einen unter Stickstoffbeaufschlagung aufgeschäumten Polyurethan-Polyester handeln.

Als Verstärkungsschicht kommen grundsätzlich alle Gewebe, Gewirke, Vliese, Gitter, Matten und dergleichen Flächengebilde aus Glas- oder Kohlenstoff-Fasern, aus Kunstfasern wie Polyester- (z.B. Diolen®-) oder Aramid- (z.B. Kevlar®-) Fasern, aus Zellulose-Fasern oder aus Naturfasern wie Sisal- oder Flachs-Fasern, auch in Kombination, in Frage, soweit sie aufgrund ihrer Flächenstruktur und/oder der Eigenschaften der jeweils verwendeten Materialien geeignet sind, eine Verstärkung im Sinne einer Erhöhung der mechanischen Festigkeitseigenschaften auszubilden. Bevorzugt ist es jedoch, wenn die Verstärkungsschicht entsprechend dem Patentanspruch 5 aus einer Glasfasermatte besteht, was nach Untersuchungen der Anmelderin hinsichtlich der Kosten, des Gewichts sowie einfachen Verarbeitungsmöglichkeiten für die Massenfertigung einen guten Kompromiß darstellt.

Der Patentanspruch 6 sieht vor, daß die Verstärkungsschicht vom Kunststoff der Kunststoffschicht durchdrungen ist, so daß eine bestmögliche Verbindung zwischen der Kunststoffschicht und der Verstärkungsschicht gegeben ist.

Nach der Lehre des Patentanspruchs 7 weist die Außenhaut an der Innenseite eine weitere Verstärkungsschicht aus vorzugsweise einer Glasfasermatte auf, die vom Kunststoff der Kunststoffschicht durchdrungen ist. Eine solche unmittelbar an die Außenhaut angrenzende weitere Verstärkungsschicht, die wie die erste Verstärkungsschicht, d.h. wie oben beschrieben ausgebildet sein kann, hat den Vorteil, daß die Außenhaut, welche regelmäßig aus einem höherwertigeren Werkstoff besteht, in kostengünstiger Weise nicht übermäßig dick ausgebildet werden muß, um die erforderlichen Festigkeitseigenschaften des Verbundbauteils zu gewährleisten. Selbst wenn das Verbundbauteil neben einer ersten Glasfasermatte als innerer Verstärkungsschicht noch eine zusätzliche Glasfasermatte als weitere, äußere Verstärkungsschicht aufweist, werden bei gleicher Außenhautdicke zur Erzielung vergleichbarer Festigkeitseigenschaften des Verbundbauteils in vorteilhafter Weise mengenmäßig insgesamt weniger Glasfasern benötigt als im gattungsbildenden Stand der Technik, bei dem Glasfasern als Armierung mittels des LFI-Verfahrens mit in die Kunststoffschicht eingeschossen werden.

Gemäß dem Patentanspruch 8 besteht die der Innenseite der Außenhaut aufgeschäumte Kunststoffschicht in vorteilhafter Weise aus einem Polyurethan-Schaum, gebildet aus einem Polyol und einem Isocyanat im Mischungsverhältnis von 100 zu 150 bis 100 zu 180.

In einer vorteilhaften Weiterbildung des erfindungsgemäßen Verbundbauteils entsprechend dem Patentanspruch 9 ist auf der Innenseite der Verstärkungsschicht eine Innenverkleidung befestigt, so daß das Verbundbauteil für flächige Fahrzeugkarosserieteile verwendet werden kann, die sowohl einen äußeren als auch einen inneren, d.h. einen dem Fahrgastraum zugewandten Flächenbereich der Fahrzeugkarosserie ausbilden.

Der Patentanspruch 10 sieht dabei vor, daß zwischen der Verstärkungsschicht und der Innenverkleidung vorzugsweise wenigstens ein Hohlraum als Funktionsabschnitt des Verbundbauteils ausgebildet ist. Derartige Funktionsabschnitte können den jeweiligen Erfordernissen entsprechend ohne weitere Auskleidung z.B. als Belüftungskanäle oder aber auch zur Aufnahme von weiteren Bauteilen wie Kabeln, Schläuchen, Rohren etc. dienen. Ebenfalls kann durch geeignete Wahl der Geometrie und Größe sowie des Verteilungsmusters der Hohlräume in vorteilhafter Weise auf die Schallabsorptions- bzw. -dämmeigenschaften sowie die Wärmedurchgangseigenschaften des Verbundbauteils Einfluß genommen werden.

Nach der Lehre des Patentanspruchs 11 weist die Innenverkleidung zwei mittels eines Abstandshalters beabstandete Verstärkungsschichten auf, wobei der Abstandshalter und die Verstärkungsschichten von einem aufschäumbaren Kunststoff durchdrungen sind. Eine derartig ausgebildete Innenverkleidung läßt sich vorteilhaft leicht herstellen.

Wenn der Abstandshalter der Innenverkleidung wenigstens vor dem Einbringen des Kunststoffs unter Aufbringung einer vorbestimmten Kraft zumindest partiell verformbar ist, wie im Patentanspruch 12 angegeben, ist es nicht nur in einfacher Weise möglich, den jeweiligen Dämm- und/oder Unfallsicherheitserfordernissen entsprechend Innenverkleidungsbereiche von unterschiedlicher Wandstärke auszubilden, sondern es können auch leicht besagte Hohlräume auf der der Außenhaut zugewandten Seite der Innenverkleidung und/oder auf der dem Fahrgastraum zugewandten Seite der Innenverkleidung Vertiefungen in Form von beispielsweise dreidimensionalen Dekorbildern oder -motiven ausgebildet werden. Hierfür ist es lediglich erforderlich, daß die Formhälften des Schäumwerkzeugs mit einer entsprechenden (Negativ) Geometrie versehen sind.

Wie oben unter Bezugnahme auf die Merkmale des Patentanspruchs 3 beschrieben, wird es -- obgleich zur Erzielung der dort bereits erwähnten Eigenschaften Alternativen bestehen -- auch bei der Innenverkleidung entsprechend dem Patentanspruch 13 bevorzugt, wenn deren Abstandshalter aus einer Schaumkunststoffmatte besteht, deren offene Zellstruktur ein unregelmäßiges Raumgitter ausbildet. Gemäß dem Patentanspruch 14 handelt es sich bei dem Schaumkunststoff des Abstandshalters der Innenverkleidung vorzugsweise ebenfalls um einen unter Stickstoffbeaufschlagung aufgeschäumten Polyurethan-Polyester. Für die Verstärkungsschichten der Innenverkleidung gilt schließlich auch das oben bei Diskussion des Patentanspruchs 5 zu den Verstärkungsschichten an der Außenhaut Gesagte entsprechend, insbesondere wird es bevorzugt, wenn auch die Verstärkungsschichten der Innenverkleidung aus jeweils einer Glasfasermatte bestehen, wie im Patentanspruch 15 angegeben.

Nach der Lehre des Patentanspruchs 16 ist der in den Abstandshalter und die Verstärkungsschichten der Innenverkleidung eingebrachte Kunststoff vorzugsweise ein Polyurethan-Schaum, gebildet aus einem Polyol und einem Isocyanat im Mischungsverhältnis von 100 zu 50 bis 100 zu 80. Durch dieses sich vom Mischungsverhältnis der Kunststoffschicht an der Außenhaut unterscheidende Mischungsverhältnis ist die Kunststoffschicht der Innenverkleidung weicher als die Kunststoffschicht an der Außenhaut, die eine im Verhältnis hohe Härte und Steifigkeit aufweist.

Gemäß dem Patentanspruch 17 kann der Kunststoff der Innenverkleidung mit einem Additiv versetzt sein, das ein Aromakonzentrat bzw. einen Duftzusatz enthält. Bei einem solchen Additiv kann es sich beispielsweise um Öl oder Alkohol handeln, in dem das Aromakonzentrat gelöst ist, wie ein Parfümöl oder eine alkoholische Lösung geeigneter Duftstoffe. Somit kann in vorteilhafter Weise ein ggf. unangenehmer Eigengeruch insbesondere der Innenverkleidung maskiert werden, der speziell bei Neuwagen oft als störend empfunden wird, und/oder es kann der Autokauf durch einen suggestiv wirkenden, illusionsfördernden Duft stimuliert werden.

Der Patentanspruch 18 sieht vor, daß die Innenverkleidung auf der Innenseite eine Optik- und Haptikschicht aufweist, die ihrerseits entsprechend dem Patentanspruch 19 sandwichartig aus einer weichen Schaumkunststoff- oder Filzschicht und einer Dekorschicht ausgebildet ist. Durch eine solche Optik- und Haptikschicht kann die Innenverkleidung den jeweiligen Erfordernissen entsprechend leicht hinsichtlich des äußeren Erscheinungsbilds (Dekorschicht: Farbe, Dekormaterial; Schaumkunststoff- oder Filzschicht: Tastempfindung, sogenannter "Softtouch") der sonstigen Innenausstattung des Fahrzeugs angepaßt werden. So kann entsprechend dem Patentanspruch 20 die Dekorschicht der Optik- und Haptikschicht aus einem textilen Flächengebilde, Leder, einem Leder- oder Velourslederimitat oder einer dekorativen Kunststoffolie bestehen, je nach den jeweiligen Design-Wünschen. Des weiteren ist die Schaumkunststoff- oder Filzschicht der Optik- und Haptikschicht einer guten Schallabsorption des Verbundbauteils förderlich.

Der Patentanspruch 21 sieht vor, daß zwischen der inneren Verstärkungsschicht und der Optik- und Haptikschicht der Innenverkleidung eine im wesentlichen flüssigkeitsdichte Sperrschicht eingefügt ist. Eine solche Sperrschicht dient in vorteilhafter Weise dazu, ein Durchschlagen des aufschäumenden Kunststoffs durch die Poren der Optik- und Haptikschicht der Innenverkleidung in deren Sichtbereich hinein zu verhindern.

Die Sperrschicht kann grundsätzlich auch aus einem Polyurethan-Schaum bestehen. Bevorzugt ist es aber, wenn die Sperrschicht aus einem offenzelligen Polyethylen-Schaum besteht, wie im Patentanspruch 22 angegeben, der gegenüber dem Polyurethan-Schaum eine bessere Sperrwirkung aufzeigt, wie Versuche der Anmelderin ergeben haben.

Schließlich ist gemäß der Lehre des Patentanspruchs 23 die Innenverkleidung vorzugsweise licht- und/oder luftdurchlässig ausgebildet, so daß bei einer Verwendung des Verbundbauteils im Dachbereich etwa durch Anordnung von geeigneten Leuchtkörpern in Hohlräumen, die gemäß dem Patentanspruch 10 als Funktionsabschnitte zwischen der Verstärkungsschicht und der Innenverkleidung vorgesehen sein können, eine Illumination des Fahrgastraums erfolgen kann. Bei einer luftdurchlässigen Ausbildung der Innenverkleidung und einer geeigneten Anordnung von als Belüftungskanälen ausgebildeten Hohlräumen zwischen der Verstärkungsschicht und der Innenverkleidung, die von einer Klimaanlage oder einem Belüftungssystem des Fahrzeugs gespeist werden können, ist hier in vorteilhafter Weise eine Zwangsbelüftung des Fahrgastraums möglich ("Luftdusche"), was bisher insbesondere im in Fahrtrichtung hinteren Bereich des Fahrgastraums Probleme bereitete.

Im folgenden wird die Erfindung anhand bevorzugter Ausführungsbeispiele unter Bezugnahme auf die beigefügten, teilweise schematischen Zeichnungen näher erläutert. Darin zeigen:
- Fig. 1: eine schematische Perspektivansicht eines schon an einer Kraftfahrzeugkarosserie angebrachten Fahrzeugdachmoduls als Beispiel für ein erfindungsgemäßes Verbundbauteil,
- Fig. 2: den abgebrochenen Schnitt durch einen Seitenbereich des Fahrzeugdachmoduls entsprechend der Schnittverlaufslinie II-II in Fig. 1,
- Fig. 3: eine im Maßstab vergrößerte schematische Schnittansicht des Details III in Fig. 2, die Einzelheiten des Sandwich-Aufbaus des Fahrzeugdachmoduls zeigt, und
- Fig. 4: eine in der Darstellungsweise der Fig. 3 entsprechende Variante des Sandwich-Aufbaus des Fahrzeugdachmoduls, bei der zwischen der inneren Verstärkungsschicht für die Außenhaut und der äußeren Verstärkungsschicht der Innenverkleidung Hohlräume als Funktionsabschnitte des Verbundbauteils ausgebildet sind.

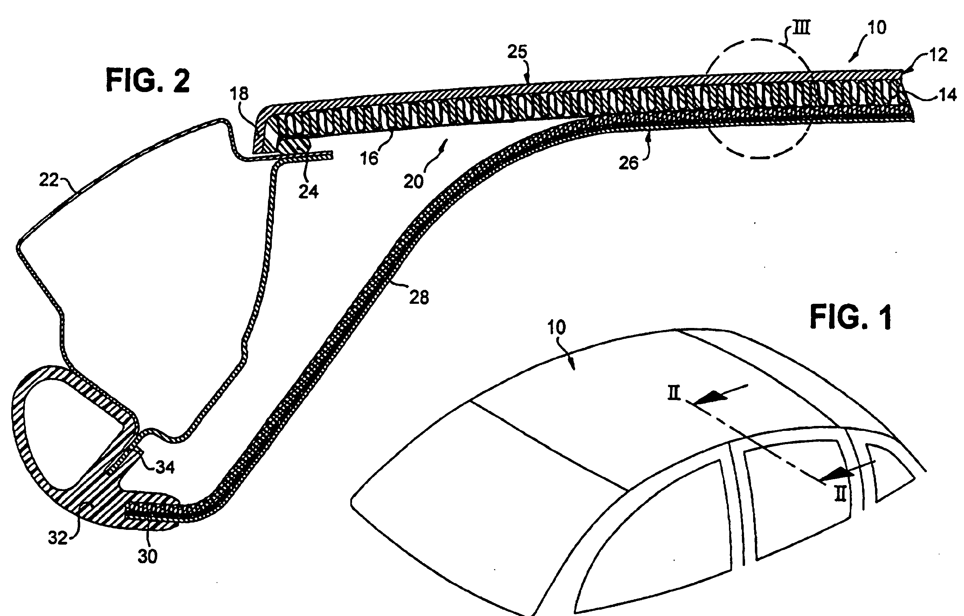

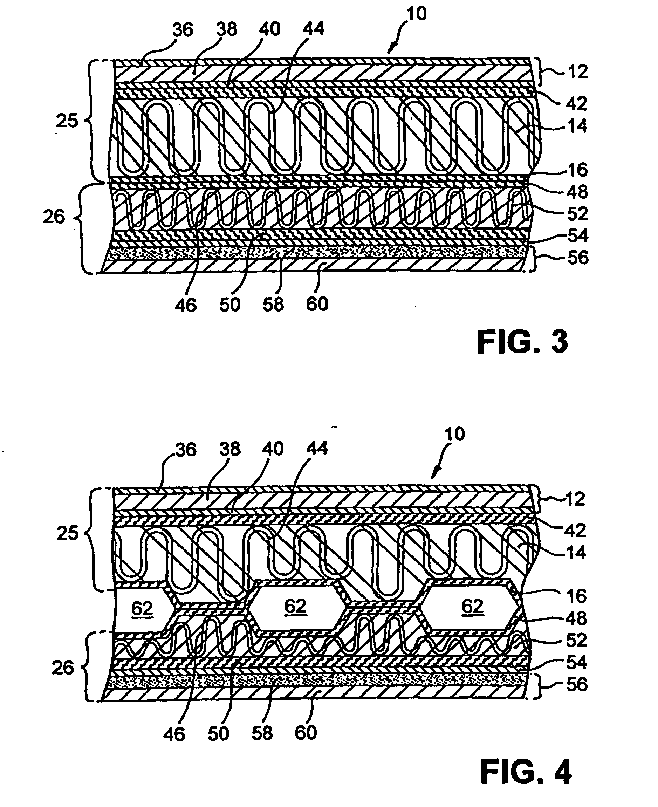

In den Figuren ist beispielhaft für ein Verbundbauteil 10 ein Fahrzeugdachmodul gezeigt, das eine feste bzw. starre Außenhaut 12 und eine der Innenseite der Außenhaut 12 in einer Schäumform (nicht dargestellt) aufgeschäumte Kunststoffschicht 14 aufweist. Wesentlich ist -- wie nachfolgend unter Bezugnahme auf die Fig. 3 und 4 noch näher beschrieben werden wird -- daß an der Innenseite der Kunststoffschicht 14, d.h. in den Figuren 2 bis 4 unterhalb der Kunststoffschicht 14 eine Verstärkungsschicht 16 mit angeschäumt ist, die schon in der Schäumform von der Außenhaut 12 definiert beabstandet gehalten ist, um das Verbundbauteil 10 mit einer vorbestimmten Stabilität bzw. Festigkeit auszustatten.

Wie die Fig. 2 zeigt, ist das Verbundbauteil 10 mit seinen Außenrändern, die mit einer Aufkantung 18 der Außenhaut 12 abschließen, auf einen eine Dachöffnung 20 umgebenden Karosserierahmen 22 aufgelegt und mit diesem z.B. über Klebstoffraupen 24 fest verbunden. Die Außenhaut 12, die Kunststoffschicht 14 und die Verstärkungsschicht 16 bilden hier eine auf dem Karosserierahmen 22 aufliegende feste Außen- bzw. Dachschale 25 des Verbundbauteils 10 aus.

Auf der Innenseite der Verstärkungsschicht 16, d.h. auf der dem Fahrgastraum zugewandten Seite der Außenschale 25 ist eine einen Dachhimmel ausbildende Innenverkleidung 26 befestigt, die unter Bezugnahme auf die Fig. 3 und 4 ebenfalls noch näher beschrieben werden wird. Im dargestellten Ausführungsbeispiel ist die Innenverkleidung 26 mittels eines Klebstoffs an der Verstärkungsschicht 16 befestigt. Die Innenverkleidung 26 des Verbundbauteils 10 könnte prinzipiell aber auch lösbar mittels Klettbändern oder -- wie in der DE 199 47 238 A1 oder der älteren deutschen Patentanmeldung 101 16 593.5 der Anmelderin beschrieben -- mechanisch an der Außenschale 25 befestigt sein.

Im Außenrandbereich der Außenschale 25 ist die Innenverkleidung 26 nicht an der Verstärkungsschicht 16 befestigt. Hier weist die Innenverkleidung 26 von der Außenschale 25 herabhängende, flexible Randbereiche 28 auf, welche so bemessen sind, daß sie sich über die Außenschale 25 hinaus erstrecken und die dem Fahrgastraum zugewandte Seite des Karosserierahmens 22 verkleiden können. Zur Befestigung des Randbereichs 28 der Innenverkleidung 26 in seiner den Karosserierahmen 22 verkleidenden Position ist das Ende 30 des Randbereichs 28 in einen Keder 32 aus Kunststoff eingesteckt, der seinerseits auf einen entsprechenden Flansch 34 des Karosserierahmens 22 aufgesteckt ist. Im dargestellten Ausführungsbeispiel bildet der als Hohlkammerprofilabschnitt ausgebildete Keder 32 einen Teil der Türdichtung des Fahrzeugs aus.

Nachfolgend wird unter Bezugnahme auf die Fig. 3 und 4 der Sandwich-Aufbau des Verbundbauteils 10 ausgehend von dessen der Umgebung zugewandten Außenseite zu dessen dem Fahrgastraum zugewandten Innenseite hin, d.h. in der Fig. 3 bzw. 4 von oben nach unten beschrieben.

Im dargestellten Ausführungsbeispiel besteht die Außenhaut 12 der Außenschale 25 aus drei Schichten, nämlich einer äußeren Lackschicht 36, einer mittleren Trägerschicht 38 und einer inneren Primerschicht 40. Die Lackschicht 36 selbst kann ebenfalls einen -- aus Gründen der Übersichtlichkeit hier nicht dargestellten -- dreischichtigen Aufbau besitzen, mit einer auf die Trägerschicht 38 aufgebrachten Primärschicht auf Epoxydharzbasis von etwa 5 bis 7 µm Dicke als Haftvermittler, einem auf die Primerschicht aufgetragenen, farbgebenden Decklack auf Polyesterbasis von etwa 18 bis 23 µm Dicke und einer den Decklack überdeckenden Klarlackschicht aus Polyvinylidenfluorid (PVDF) von etwa 22 µm Dicke. Bei einem solchen Aufbau der Lackschicht 36 und Verwendung eines dünnen Aluminiumblechs für die Trägerschicht 38, etwa ein Blech aus AlMg 0,4 Si 1,2, kann das Aluminiumblech vor einer hydraulischen Tiefziehverformung in der gewünschten Farbe fertig lackiert sein. Versuche der Anmelderin haben gezeigt, daß eine derartig aufgebaute und mit einer Schutzfolie abgedeckte Lackschicht 36 eine mehrstufige Tiefziehverformung mit Tiefziehgeschwindigkeiten von bis zu 60 mm/s unversehrt, d.h. ohne Risse oder sonstige Beschädigungen übersteht, wie sich nach Abziehen der Schutzfolie zeigte. Es sind für die Lackschicht 36 jedoch auch Lacksysteme auf Acrylharzbasis oder Polyurethan-Basis denkbar.

Neben der angesprochenen Aluminiumlegierung eignen sich prinzipiell auch andere metallische Werkstoffe, etwa Stahl, für die Trägerschicht 38. Besteht die Trägerschicht 38 wie im dargestellten Ausführungsbeispiel aus einem metallischen Werkstoff, ist auf der Innenseite der Trägerschicht 38 die Primerschicht 40 aufgetragen, die aus einem Epoxydharz gebildet sein kann und aufgrund ihrer Affinität zum Kunststoff der Kunststoffschicht 14 als Haftvermittler zwischen der Außenhaut 12 und der Kunststoffschicht 14 dient.

Alternativ dazu kann die Außenhaut aber auch aus einer thermoplastischen Kunststoffolie, vorzugsweise einer zweischichtigen Koextrusionsfolie ausgebildet sein, die z.B. aus Polymethylmethacrylat (PMMA) für die äußere Schicht sowie einer Mischung aus Polycarbonat (PC) und Acrylnitril-Styrol-Acrylsäureester-Copolymerisat (ASA) für die innere Schicht besteht, wobei die Dicke der äußeren Schicht etwa 15 % der Gesamtdicke der Außenhaut ausmachen sollte. Die Verwendung einer Kunststoffolie bietet den Vorteil, daß der Kunststoff in der Masse in der gewünschten Farbe durchgefärbt sein kann, so daß eine Lackierung entfallen kann. Außerdem kann die Kunststoffolie den jeweiligen Erfordernissen entsprechend durch Verwendung einer hochglanzpolierten Tiefziehform bei der Herstellung der schalenförmigen Außenhaut eine glänzende Oberfläche oder durch vorhergehendes Kalandrieren eine genarbte Oberfläche erhalten. Letztere Maßnahme an der koextrudierten Kunststoffolie ermöglicht eine Gestaltung der Mikrogeometrie der Außenoberfläche der Außenhaut im Sinne einer sogenannten "Aimed Structure" derart, daß diese schmutzabweisende Eigenschaften -- sogenannter "Lotusblüten" ("Lotusflower") - Effekt -- oder geräusch- bzw. luftwiderstandsreduzierende Eigenschaften -- sogenannter "Haihaut" ("Sharkskin") - Effekt -- erhält. Bei Verwendung einer Kunststoffolie als Außenhaut wird die Innenseite der Außenhaut zweckmäßig vor dem Auftragen des schäumbaren Kunststoffs der Kunststoffschicht zur Aktivierung abgeflämmt, wodurch eine ausgezeichnete Verbindung der Außenhaut mit der geschäumten Kunststoffschicht erzielt wird, ohne die Notwendigkeit einer Primerschicht.

Der Dickenbereich der Außenhaut 12 liegt zwischen etwa 0,6 mm und etwa 1,3 mm, wobei der kleinere Wert für eine Außenhaut 12 gilt, deren Trägerschicht 38 aus Aluminium oder Stahl besteht, während der größere Wert für eine Außenhaut aus einer Kunststoffolie gilt.

Im Zusammenhang mit der Außenhaut 12 ist noch darauf hinzuweisen, daß an deren Innenseite vor dem Aufschäumen der Kunststoffschicht 14 mittels eines geeigneten Druckverfahrens z.B. durch ein Siebdruckverfahren auch Leiterbahnen (hier nicht dargestellt) für beispielsweise Dachantennen, Lautsprechersysteme, GPS, Lichtsysteme etc. ausgebildet werden können. Im Vergleich zu vorbekannten Lösungen, bei denen z.B. die Antennenleitungen an die Dachaußenhaut von innen aufgeklebt oder mechanisch befestigt werden, hat eine solche drucktechnische Ausbildung der Leiterbahnen insbesondere den Vorteil, daß die Leiterbahnen sehr flach ausgebildet werden können und somit die Dicke der Außenschale 25 nur sehr geringfügig und nur partiell erhöhen.

Im dargestellten Ausführungsbeispiel schließt sich an die Außenhaut 12 auf deren Innenseite eine weitere, äußere Verstärkungsschicht 42 an, die prinzipiell aus den bereits in der Beschreibungseinleitung erwähnten Materialien bestehen kann, vorzugsweise jedoch aus einer Glasfasermatte besteht und vom Kunststoff der Kunststoffschicht 14 durchdrungen ist. Die Verstärkungsschicht 42 weist in ihrer bevorzugten Ausgestaltung eine Vielzahl von Glasfaserbündeln auf, die vor der Ausbildung des Verbundbauteils 10 in Wirrlage zu einer Glasfasermatte von etwa 0,5 mm Dicke verpreßt wurden. Entsprechendes gilt für die innere Verstärkungsschicht 16, die ebenfalls vorzugsweise aus einer Glasfasermatte besteht, vom Kunststoff der Kunststoffschicht 14 durchdrungen ist und eine Dicke von wenigstens 0,5 mm aufweist.

Zwischen die Verstärkungsschichten 16 und 42 ist ein vom Kunststoff der Kunststoffschicht 14 durchdrungener Abstandshalter 44 eingefügt, der dazu dient, die Verstärkungsschicht 16 von der Außenhaut 12 definiert beabstandet zu halten, wenn die Kunststoffschicht 14 in der hier nicht gezeigten Schäumform ausgebildet wird. Hierfür ist der Abstandshalter 44 wenigstens vor dem Aufschäumen der Kunststoffschicht 14 unter Aufbringung einer vorbestimmten Kraft zumindest partiell verformbar. Mit anderen Worten gesagt weist der Abstandshalter 44 eine gewisse Federwirkung auf, aufgrund deren bei der Ausbildung des Verbundbauteils 10 die Verstärkungsschicht 16 in der geschlossenen Schäumform gegenüber der flächig an einer Hälfte der Schäumform anliegenden Außenhaut 12 abgestützt flächig gegen die andere Hälfte der Schäumform gedrückt wird, während der nicht-armierte Kunststoff der Kunststoffschicht 14 diese Federwirkung unterstützend aufschäumt.

In den Figuren ist der Abstandshalter 44 lediglich schematisch durch eine doppelte Wellenlinie dargestellt. Tatsächlich besteht der Abstandshalter 44 in einer bevorzugten Ausführungsform jedoch aus einer Schaumkunststoffmatte, deren sehr offene Zellstruktur ein unregelmäßiges Raumgitter ausbildet, welches im Aussehen einem osteoporösen Knochengewebe ähnelt. Vorzugsweise handelt es sich bei dem Schaumkunststoff des Abstandshalters 44 um einen unter Stickstoffbeaufschlagung aufgeschäumten Polyurethan-Polyester, der nach dem Aufschäumen eine geringe Rohdichte von ca. 20 kg/m³, eine Stauchhärte von ungefähr 20 kPa, eine Zellenanzahl von ca. 13 Zellen pro cm, eine Zugfestigkeit von etwa 230 kPa und eine Bruchdehnung von ungefähr 70 % aufweist. Ein solcher Abstandshalter könnte auch aus einem Polyamid bestehen, was insbesondere aus Recycling-Gründen jedoch weniger bevorzugt ist. Ebenfalls ist der Einsatz von anderen insbesondere aus Filteranwendungen bekannten retikulierten Schaumkunststoffen denkbar.

Die der Innenseite der Außenhaut 12 aufgeschäumte Kunststoffschicht 14 selbst besteht bevorzugt aus einem offenzelligen Polyurethan-Schaum, gebildet aus einem Polyol und einem Isocyanat in einem Mischungsverhältnis, das zwischen ca. 100 Polyol-Anteile / 150 Isocyanat-Anteile und ca. 100 Polyol-Anteile /180 Isocyanat-Anteile liegt. Dieser Schaumkunststoff zeichnet sich durch ein geringes Gewicht bei einer im Verhältnis hohen Steifigkeit aus und bietet zudem eine gute Wärmestabilität und ein gutes Splitterverhalten. Die Dicke der Kunststoffschicht 14 zwischen den Verstärkungsschichten 16 und 42 kann über die Länge bzw. Breite des Verbundbauteils 10 gesehen variieren, liegt im allgemeinen jedoch zwischen 4 und 12 mm.

Wie bereits unter Bezugnahme auf die Fig. 2 beschrieben, ist an der Innenseite der Verstärkungsschicht 16 der Außenschale 25 die Innenverkleidung 26 geeignet befestigt. Die Innenverkleidung 26 umfaßt zwei mittels eines Abstandshalters 46 beabstandete Verstärkungsschichten 48, 50, wobei der Abstandshalter 46 und die Verstärkungsschichten 48, 50 von einem aufschäumbaren Kunststoff 52 durchdrungen sind. Hinsichtlich des Materials, der Struktur und der Funktion des Abstandshalters 46 kann an dieser Stelle auf die obige Beschreibung des Abstandshalters 44 in der Außenschale 25 verwiesen werden. Insbesondere ist der Abstandshalter 46 der Innenverkleidung 26 wenigstens vor dem Einbringen des Kunststoffs 52 unter Aufbringung einer vorbestimmten Kraft zumindest partiell verformbar und besteht bevorzugt aus einer Schaumkunststoffmatte, deren offene Zellstruktur ein unregelmäßiges Raumgitter ausbildet, wobei es sich bei dem Schaumkunststoff des Abstandshalters 46 vorzugsweise um einen unter Stickstoffbeaufschlagung aufgeschäumten Polyurethan-Polyester handelt.

Auch hinsichtlich der Verstärkungsschichten 48 und 50 der Innenverkleidung 26 kann auf die obige Beschreibung der Verstärkungsschichten 16 und 42 der Außenschale 25 verwiesen werden, d.h. es ist insbesondere bevorzugt, wenn die Verstärkungsschichten 48 und 50 jeweils aus einer Glasfasermatte bestehen, die eine Dicke von ca. 0,5 mm aufweist.

Bei dem in den Abstandshalter 44 und die Verstärkungsschichten 48, 50 der Innenverkleidung 26 eingebrachten Kunststoff 52 handelt es sich vorzugsweise um einen Polyurethan-Schaum, gebildet aus einem Polyol und einem Isocyanat im Mischungsverhältnis von ca. 100 Polyol-Anteile / 50 Isocyanat-Anteile bis ca. 100 Polyol-Anteile / 80 Isocyanat-Anteile. Dieser gegenüber dem Kunststoffschaum 14 der Außenschale 25 weichere Kunststoffschaum 52 zeichnet sich insbesondere durch gute Luftschall-Absorptionseigenschaften aus. Wie bereits eingangs diskutiert, kann der Kunststoff 52 mit einem Additiv versetzt sein, das ein Aromakonzentrat enthält, um der Innenverkleidung 26 einen bestimmten Geruch zu verleihen bzw. einen Eigengeruch der Außenschale 25 und/oder der Innenverkleidung 26 zu überdecken, der etwa durch chemische Lösungsmittel in den für die Außenschale 25 bzw. die Innenverkleidung 26 verwendeten Kunststoffen bedingt sein könnte. Zweckmäßig wird dieses Additiv (Parfümöl bzw. Duftstoffe in alkoholischer Lösung) einem der Polyurethan-Schaum-Bestandteile, d.h. dem Polyol oder dem Isocyanat beigemischt, bevor diese Bestandteile durch Rühren vermengt werden.

Die Dicke der zwischen den Verstärkungsschichten 48 und 50 befindlichen Kunststoffschicht 52 beträgt im allgemeinen ca. 3 bis 6 mm. Durch entsprechende Aussparungen bzw. Vertiefungen in der hier nicht gezeigten Schäumform für die Innenverkleidung 26 können örtlich auch dickere Bereiche ausgebildet werden, um etwa stoßabsorbierende Verkleidungsabschnitte im Bereich des Karosserierahmens 22 auszubilden, die der MVSS 201 (Head Impact Protection) genügen.

An die innere Verstärkungsschicht 50 der Innenverkleidung 26 schließt sich eine im wesentlichen flüssigkeitsdichte und dennoch luftdurchlässige Sperrschicht 54 an, die vorzugsweise aus einem offenzelligen Polyethylen-Schaum besteht und eine Dicke von ca. 1 mm aufweist. Die Sperrschicht 54 dient dazu, in der Schäumform für die Innenverkleidung 26 ein Durchschlagen des aufschäumenden Kunststoffs der Kunststoffschicht 52 in eine an die Sperrschicht 54 auf der Innenseite der Innenverkleidung 26 angrenzende Optik- und Haptikschicht 56 zu verringern bzw. zu vermeiden, die mit der Sperrschicht 54 mittels eines thermoplastischen Klebstoffs verklebt ist.

Die innere Optik- und Haptikschicht 56 der Innenverkleidung 26 ist schließlich sandwichartig aus einer weichen Schaumkunststoff- oder Filzschicht 58 und einer Dekorschicht 60 ausgebildet. Hierbei besteht die Schaumkunststoffschicht 58 vorzugsweise aus einem offenzelligen Blockschaum mit einer Rohdichte von ungefähr 20 kg/m³ und einer Dicke von ca. 1 bis 3,5 mm, der auch gute Schallisolationseigenschaften aufweist. Die mit der Schaumkunststoffschicht 58 mittels eines thermoplastischen Klebstoffs verbundene Dekorschicht 60, welche eine Dicke von ca. 0,5 bis 1,5 mm aufweist und ggf. genadelt sein kann, um Luftdurchlässigkeit zu gewährleisten, kann schließlich aus einem textilen Flächengebilde, Leder, einem Leder- oder Velourslederimitat (Alcantara®) oder einer dekorativen Kunststoffolie bestehen. Es ist ersichtlich, daß insbesondere textile Flächengebilde und Kunststoffolien auch eine mehrfarbige Ausbildung der Dekorschicht 60 gestatten.

Die Fig. 4 zeigt eine Variante des in Fig. 3 dargestellten Sandwich-Aufbaus des Verbundbauteils 10, die sich von letzterem im wesentlichen darin unterscheidet, daß zwischen der inneren Verstärkungsschicht 16 der Außenschale 25 und der äußeren Verstärkungsschicht 48 der Innenverkleidung 26 mehrere sich kanalartig in Längsrichtung des Fahrzeugs erstreckende Hohlräume 62 als Funktionsabschnitte des Verbundbauteils 10 ausgebildet sind. Die Hohlräume 62 können beispielsweise als Belüftungskanäle oder aber auch zur Aufnahme von weiteren Bauteilen wie Kabeln, Schläuchen, Rohren, Beleuchtungskörpern etc. dienen. Insbesondere bei der in Fig. 4 gezeigten Variante des Sandwich-Aufbaus kann die Innenverkleidung 26 durch entsprechende Materialwahl und Dimensionierung vorteilhaft licht- und luftdurchlässig sein, so daß der Fahrgastraum mittels in den Hohlräumen 62 aufgenommenen Beleuchtungskörpern (nicht dargestellt) von oben illuminiert werden kann bzw. über die Hohlräume 62 durch die Innenverkleidung 26 hindurch eine Belüftung des Fahrgastraums erfolgen kann. Derartige Hohlräume 62 lassen sich leicht dadurch ausbilden, daß wenigstens eine die Schäumformen für die Außenschale 25 und die Innenverkleidung 26 an einer Formhälfte eine entsprechend strukturierte Oberfläche aufweist.

In diesem Zusammenhang sei noch erwähnt, daß auf entsprechende Weise auch dreidimensionale Motive oder Bilder an der Innenseite der Innenverkleidung 26 ausgebildet werden können, d.h. durch Vorsehen einer geeignet strukturierten Oberfläche an der entsprechenden Formhälfte der Schäumform für die Innenverkleidung 26, welche sich beim Schäumvorgang durch die elastische Optik- und Haptikschicht 56, die Sperrschicht 54 und die (zunächst) flexible Verstärkungsschicht 50 hindurch in der aufschäumenden Kunststoffschicht 52 der Innenverkleidung 26 deutlich abbildet.

Obgleich in den Figuren nicht dargestellt, können schließlich insbesondere in der Kunststoffschicht 14 der Außenschale 25 den jeweiligen Erfordernissen entsprechend weitere Funktionselemente mit eingeschäumt sein, wie Profile für Kabelkanäle, Wasserabläufe, Führungsprofile für einen eine Öffnung in der Außenhaut wahlweise verschließenden Schiebedeckel, und/oder Befestigungs- bzw. Verbindungselemente dafür und/oder für Handgriffe, Sonnenblenden, etc.

Das Verbundbauteil 10 mit dem oben beschriebenen Sandwich-Aufbau wird wie folgt hergestellt, wobei Lösungsmittel in vorteilhafter Weise nicht verwendet werden müssen.

Zunächst wird zur Ausbildung der Außenschale 25 die entsprechend der gewünschten Dachkrümmung in bekannter Weise vorgeformte Außenhaut 12 in die untere Formhälfte der Schäumform für die Außenschale 25 formschlüssig eingelegt. Sodann werden die Verstärkungsschicht 42, der Abstandshalter 44 und die Verstärkungsschicht 16 in dieser Reihenfolge auf die Innenseite der Außenhaut 12 aufgelegt. Die in einem Mischkopf durchmischte flüssige Kunststoffmasse für die Kunststoffschicht 14 wird danach auf die Verstärkungsschicht 16 etwa in deren Mitte beginnend über einen etwa spiralförmigen Weg aufgetragen, wobei die Kunststoffmasse, die im flüssigen Zustand ein wasserähnliches Fließvermögen aufzeigt, sofort die Verstärkungsschicht 16, den Abstandshalter 44 und die Verstärkungsschicht 42 durchtränkt. Sodann wird die obere Formhälfte der Schäumform auf die untere Formhälfte aufgelegt, d.h. die Schäumform geschlossen. Dabei wird der Abstandshalter 44 entsprechend der Geometrie der oberen Formhälfte ggf. nur örtlich komprimiert, so daß die Verstärkungsschicht 16 -- wie oben bereits angesprochen -- durch den Abstandshalter 44 an die obere Formhälfte angedrückt oder, mit anderen Worten gesagt, mit einem vorbestimmten Abstand zur Außenhaut 12 gehalten wird. Der auftreibende Kunststoffschaum füllt die zwischen den Formhälften geeignet abgedichtete Schäumform und dringt bis in die ggf. später zu beschneidenden Randbereiche der Außenhaut 12 vor. Nach Verstreichen einer gewissen Reaktionszeit wird die Schäumform geöffnet und die nunmehr einstückige Außenschale 25 aus der Schäumform herausgenommen.

Zeitlich unabhängig von der Ausbildung der Außenschale 25 wird die Innenverkleidung 26 hergestellt. Hierbei werden die Verstärkungsschicht 48, der Abstandshalter 46 und die Verstärkungsschicht 50 in dieser Reihenfolge auf die ggf. strukturierte Oberfläche der unteren Formhälfte der Schäumform für die Innenverkleidung 26 aufgelegt. Ferner wird die aus Sperrschicht 54 und Optik- und Haptikschicht 56 bestehende, bereits verklebte Sandwichschicht in aufgespannter Form mittels eines in einer Nut oder Aussparung der oberen Formhälfte der Schäumform eingesetzten Spannrahmens vorübergehend an der oberen Formhälfte der Schäumform so befestigt, daß sich die Sperrschicht 54 auf der der unteren Formhälfte zugewandten Seite der oberen Formhälfte befindet. Sodann wird die in einem Mischkopf durchmischte, wasserähnlich flüssige Kunststoffmasse für die Kunststoffschicht 52 auf die Verstärkungsschicht 50 etwa in deren Mitte beginnend über einen etwa spiralförmigen Weg aufgetragen, wobei die Kunststoffmasse sofort die Verstärkungsschicht 50, den Abstandshalter 46 und die Verstärkungsschicht 48 durchtränkt. In der Folge wird die obere Formhälfte der Schäumform auf die untere Formhälfte aufgelegt bzw. die Schäumform dicht geschlossen. Dabei sorgt der Abstandshalter 46 mit seinen elastischen Eigenschaften in Verbindung mit den Verdrängungskräften des auftreibenden Kunststoffschaums dafür, daß sich die ggf. strukturierten Oberflächen der Formhälften durch die Verstärkungsschicht 48 bzw. die aus Optik- und Haptikschicht 56 sowie Sperrschicht 54 bestehende Sandwichschicht hindurch in der Kunststoffschicht 52 abbilden. Nach Verstreichen einer gewissen Reaktionszeit wird die Schäumform geöffnet und die im Ergebnis einstückige Innenverkleidung 26 aus der Schäumform herausgenommen.

Schließlich werden an der Innenseite der Verstärkungsschicht 16 der Außenschale 25 und an der Außenseite der Verstärkungsschicht 48 der Innenverkleidung 26 Klebeflächen vorbereitet und die Innenverkleidung 26 mit der Außenschale 25 zur Ausbildung eines einteiligen Sandwichs verklebt.

### Bezugszeichenliste

- 10: Verbundbauteil
- 12: Außenhaut
- 14: Kunststoffschicht
- 16: Verstärkungsschicht
- 18: Aufkantung
- 20: Dachöffnung
- 22: Karosserierahmen
- 24: Klebstoffraupe
- 25: Außenschale
- 26: Innenverkleidung
- 28: Randbereich
- 30: Ende
- 32: Keder
- 34: Flansch
- 36: Lackschicht
- 38: Trägerschicht
- 40: Primerschicht
- 42: Verstärkungsschicht
- 44: Abstandshalter
- 46: Abstandshalter
- 48: Verstärkungsschicht
- 50: Verstärkungsschicht
- 52: Kunststoffschicht
- 54: Sperrschicht
- 56: Optik- und Haptikschicht
- 58: Schaumkunststoff- oder Filzschicht
- 60: Dekorschicht
- 62: Hohlraum

## Patentansprüche

1. Fahrzeugkarosserieteil (10) in Verbundbauweise, insbesondere Fahrzeugdach, mit einer festen Außenhaut (12) und einer der Innenseite der Außenhaut (12) in einer Schäumform aufgeschäumten Kunststoffschicht (14), **dadurch gekennzeichnet, daß** an der Innenseite der Kunststoffschicht (14) eine Verstärkungsschicht (16) mit angeschäumt ist, die schon in der Schäumform von der Außenhaut (12) mittels eines zwischen die Verstärkungsschicht (16) und die Außenhaut (12) eingefügten Abstandshalters (44) definiert beabstandet gehalten ist, der vom Kunststoff der Kunststoffschicht (14) durchdrungen ist.

2. Fahrzeugkarosserieteil (10) nach Anspruch 1, **dadurch gekennzeichnet, daß** der Abstandshalter (44) wenigstens vor dem Aufschäumen der Kunststoffschicht (14) unter Aufbringung einer vorbestimmten Kraft zumindest partiell verformbar ist.

3. Fahrzeugkarosserieteil (10) nach Anspruch 1 oder 2, **dadurch gekennzeichnet, daß** der Abstandshalter (44) aus einer Schaumkunststoffmatte besteht, deren offene Zellstruktur ein unregelmäßiges Raumgitter ausbildet.

4. Fahrzeugkarosserieteil (10) nach Anspruch 3, **dadurch gekennzeichnet, daß** es sich bei dem Schaumkunststoff des Abstandshalters (44) um einen unter Stickstoffbeaufschlagung aufgeschäumten Polyurethan-Polyester handelt.

5. Fahrzeugkarosserieteil (10) nach einem der vorhergehenden Ansprüche, **dadurch gekennzeichnet, daß** die Verstärkungsschicht (16) aus einer Glasfasermatte besteht.

6. Fahrzeugkarosserieteil (10) nach einem der vorhergehenden Ansprüche, **dadurch gekennzeichnet, daß** die Verstärkungsschicht (16) vom Kunststoff der Kunststoffschicht (14) durchdrungen ist.

7. Fahrzeugkarosserieteil (10) nach einem der vorhergehenden Ansprüche, **dadurch gekennzeichnet, daß** die Außenhaut (12) an der Innenseite eine weitere Verstärkungsschicht (42) aus vorzugsweise einer Glasfasermatte aufweist, die vom Kunststoff der Kunststoffschicht (14) durchdrungen ist.

8. Fahrzeugkarosserieteil (10) nach einem der vorhergehenden Ansprüche, **dadurch gekennzeichnet, daß** die der Innenseite der Außenhaut (12) aufgeschäumte Kunststoffschicht (14) aus einem Polyurethan-Schaum, gebildet aus einem Polyol und einem Isocyanat im Mischungsverhältnis von 100 zu 150 bis 100 zu 180, besteht.

9. Fahrzeugkarosserieteil (10) nach einem der vorhergehenden Ansprüche, **dadurch gekennzeichnet, daß** auf der Innenseite der Verstärkungsschicht (16) eine Innenverkleidung (26) befestigt ist.

10. Fahrzeugkarosserieteil (10) nach Anspruch 9, **dadurch gekennzeichnet, daß** zwischen der Verstärkungsschicht (16) und der Innenverkleidung (26) wenigstens ein Hohlraum (62) als Funktionsabschnitt des Fahrzeugkarosserieteils (10) ausgebildet ist.

11. Fahrzeugkarosserieteil (10) nach Anspruch 9 oder 10, **dadurch gekennzeichnet, daß** die Innenverkleidung (26) zwei mittels eines Abstandshalters (46) beabstandete Verstärkungsschichten (48, 50) aufweist, wobei der Abstandshalter (46) und die Verstärkungsschichten (48, 50) von einem aufschäumbaren Kunststoff (52) durchdrungen sind.

12. Fahrzeugkarosserieteil (10) nach Anspruch 11, **dadurch gekennzeichnet, daß** der Abstandshalter (46) der Innenverkleidung (26) wenigstens vor dem Einbringen des Kunststoffs (52) unter Aufbringung einer vorbestimmten Kraft zumindest partiell verformbar ist.

13. Fahrzeugkarosserieteil (10) nach Anspruch 11 oder 12, **dadurch gekennzeichnet, daß** der Abstandshalter (46) der Innenverkleidung (26) aus einer Schaumkunststoffmatte besteht, deren offene Zellstruktur ein unregelmäßiges Raumgitter ausbildet.

14. Fahrzeugkarosserieteil (10) nach Anspruch 13, **dadurch gekennzeichnet, daß** es sich bei dem Schaumkunststoff des Abstandshalters (46) der Innenverkleidung (26) um einen unter Stickstoffbeaufschlagung aufgeschäumten Polyurethan-Polyester handelt.

15. Fahrzeugkarosserieteil (10) nach einem der Ansprüche 11 bis 14, **dadurch gekennzeichnet, daß** die Verstärkungsschichten (48, 50) der Innenverkleidung (26) aus jeweils einer Glasfasermatte bestehen.

16. Fahrzeugkarosserieteil (10) nach einem der Ansprüche 11 bis 15, **dadurch gekennzeichnet, daß** der in den Abstandshalter (46) und die Verstärkungsschichten (48, 50) der Innenverkleidung (26) eingebrachte Kunststoff (52) ein Polyurethan-Schaum ist, gebildet aus einem Polyol und einem Isocyanat im Mischungsverhältnis von 100 zu 50 bis 100 zu 80.

17. Fahrzeugkarosserieteil (10) nach einem der Ansprüche 11 bis 16, **dadurch gekennzeichnet, daß** der Kunststoff (52) der Innenverkleidung (26) mit einem Additiv versetzt ist, das ein Aromakonzentrat enthält.

18. Fahrzeugkarosserieteil (10) nach einem der Ansprüche 9 bis 17, **dadurch gekennzeichnet, daß** die Innenverkleidung (26) auf der Innenseite eine Optik- und Haptikschicht (56) aufweist.

19. Fahrzeugkarosserieteil (10) nach Anspruch 18, **dadurch gekennzeichnet, daß** die Optik- und Haptikschicht (56) der Innenverkleidung (26) sandwichartig aus einer weichen Schaumkunststoff- oder Filzschicht (58) und einer Dekorschicht (60) ausgebildet ist.

20. Fahrzeugkarosserieteil (10) nach Anspruch 19, **dadurch gekennzeichnet, daß** die Dekorschicht (60) aus einem textilen Flächengebilde, Leder, einem Leder- oder Velourslederimitat oder einer dekorativen Kunststoffolie besteht.

21. Fahrzeugkarosserieteil (10) nach einem der Ansprüche 18 bis 20, **dadurch gekennzeichnet, daß** zwischen der inneren Verstärkungsschicht (50) und der Optik- und Haptikschicht (56) der Innenverkleidung (26) eine im wesentlichen flüssigkeitsdichte Sperrschicht (54) eingefügt ist.

22. Fahrzeugkarosserieteil (10) nach Anspruch 21, **dadurch gekennzeichnet, daß** die Sperrschicht (54) aus einem offenzelligen Polyethylen-Schaum besteht.

23. Fahrzeugkarosserieteil (10) nach einem der Ansprüche 9 bis 22, **dadurch gekennzeichnet, daß** die Innenverkleidung (26) licht- und/oder luftdurchlässig ist.

## Claims

1. Vehicle body component (10) having a composite structure, in particular vehicle roof, with a firm outer skin (12) and a plastic layer (14) foamed in a foaming form onto the inner side of the outer skin (12), **characterized in that** a reinforcing layer (16) is foamed onto the inner side of the plastic layer (14) at the same time and which has already been supported at a defined distance from the outer skin (12) by means of a spacer (44) inserted between the reinforcing layer (16) and the outer skin (12) and penetrated by the plastic of the plastic layer (14).

2. Vehicle body component (10) according to Claim 1, **characterized in that** the spacer (44) is, at least prior to foaming the plastic layer (14), at least partially deformable under application of a pre-determined force.

3. Vehicle body component (10) according to Claim 1 or 2, **characterized in that** the spacer (44) is made of a foam plastic mat whose open cell structure forms an irregular space lattice.

4. Vehicle body component (10) according to Claim 3, **characterized in that** the foam plastic of the spacer (44) is a polyurethane polyester foamed under the impact of nitrogen.

5. Vehicle body component (10) according to one of the preceding claims, **characterized in that** the reinforcing layer (16) is made of a glass fiber mat.

6. Vehicle body component (10) according to one of the preceding claims, **characterized in that** the reinforcing layer (16) is penetrated by the plastic of the plastic layer (14).

7. Vehicle body component (10) according to one of the preceding claims, **characterized in that** the outer skin (12) has on the inner side a further reinforcing layer (42) preferably made of a glass fiber mat penetrated by the plastic of the plastic layer (14).

8. Vehicle body component (10) according to one of the preceding claims, **characterized in that** the plastic layer (14) foamed onto the inner side of the outer skin (12) is made of a polyurethane foam formed from a polyol and an isocyanate in the mixing ratio of 100 to 150 up to 100 to 180.

9. Vehicle body component (10) according to one of the preceding claims, **characterized in that** an inner lining (26) is secured on the inner side of the reinforcing layer (16).

10. Vehicle body component (10) according to Claim 9, **characterized in that** at least one cavity (62) is formed between the reinforcing layer (16) and the inner lining (26) to form a functional section of the vehicle body component (10).

11. Vehicle body component (10) according to Claim 9 or 10, **characterized in that** the inner lining (26) has two reinforcing layers (48, 50) spaced apart by means of a spacer (46), the spacer (46) and the reinforcing layers (48, 50) being penetrated by a foamable plastic (52).

12. Vehicle body component (10) according to Claim 11, **characterized in that** the spacer (46) of the inner lining (26) is, at least prior to the introduction of the plastic (52), at least partially deformable under application of a pre-determined force.

13. Vehicle body component (10) according to Claim 11 or 12, **characterized in that** the spacer (46) of the inner lining (26) is made of a foam plastic mat whose open cell structure forms an irregular space lattice.

14. Vehicle body component (10) according to Claim 13, **characterized in that** the foam plastic of the spacer (46) of the inner lining (26) is a polyurethane polyester foamed under the impact of nitrogen.

15. Vehicle body component (10) according to one of the Claims 11 to 14, **characterized in that** the reinforcing layers (48, 50) of the inner lining (26) are respectively made of a glass fiber mat.

16. Vehicle body component (10) according to one of the Claims 11 to 15, **characterized in that** the plastic (52) introduced into the spacer (46) and the reinforcing layers (48, 50) of the inner lining (26) is a polyurethane foam, formed from a polyol and an isocyanate in the mixing ratio of 100 to 50 up to 100 to 80.

17. Vehicle body component (10) according to one of the Claims 11 to 16, **characterized in that** the plastic (52) of the inner lining (26) is mixed with an additive containing an aroma concentrate.

18. Vehicle body component (10) according to one of the Claims 9 to 17, **characterized in that** the inner lining (26) has an optics and haptics layer (56) on the inner side.

19. Vehicle body component (10) according to Claim 18, **characterized in that** the optics and haptics layer (56) of the inner lining (26) is formed sandwich-like from a soft foam plastic or felt layer (58) and a decorative layer (60).

20. Vehicle body component (10) according to Claim 19, **characterized in that** the decorative layer (60) is made of a textile planar formed body, leather, imitation leather or suede or a decorative plastic film.

21. Vehicle body component (10) according to one of the Claims 18 to 20, **characterized in that** an essentially fluid-tight barrier layer (54) is inserted between the inner reinforcing layer (50) and the optics and haptics layer (56) of the inner lining (26).

22. Vehicle body component (10) according to Claim 21, **characterized in that** the barrier layer (54) is made of an open-celled polyethylene foam.

23. Vehicle body component (10) according to one of the Claims 9 to 22, **characterized in that** the inner lining (26) is light- and/or air-permeable.

## Revendications

1. Pièce de carrosserie de véhicule (10) d'un mode de construction composite, notamment toit ou pavillon de véhicule, comprenant une membrane extérieure (12) solide et une couche de matière plastique (14) appliquée par expansion alvéolaire sur le côté intérieur de la membrane extérieure (12), dans un moule d'expansion alvéolaire, **caractérisée en ce que** sur le côté intérieur de la couche de matière plastique (14) est appliquée simultanément avec l'expansion alvéolaire, une couche de renfort (16) qui est déjà maintenue dans le moule d'expansion alvéolaire, à distance définie de la membrane extérieure (12), au moyen d'un élément d'espacement (44) inséré entre la couche de renfort (16) et la membrane extérieure (12) et traversé ou imprégné par la matière plastique de la couche de matière plastique (14).

2. Pièce de carrosserie de véhicule (10) selon la revendication 1, **caractérisée en ce que** l'élément d'espacement (44), au moins avant l'expansion alvéolaire de la couche de matière plastique (14), peut être déformé au moins partiellement, par l'application d'une force prédéterminée.

3. Pièce de carrosserie de véhicule (10) selon la revendication 1 ou 2, **caractérisée en ce que** l'élément d'espacement (44) est constitué par un mat de matière plastique alvéolaire ou de mousse de matière plastique, dont la structure alvéolaire ou cellulaire ouverte forme un réseau spatial irrégulier.

4. Pièce de carrosserie de véhicule (10) selon la revendication 3, **caractérisée en ce qu'**en ce qui concerne la matière plastique alvéolaire ou mousse de matière plastique de l'élément d'espacement (44), il s'agit d'un polyuréthanne-polyester ayant subit une expansion alvéolaire par alimentation en azote.

5. Pièce de carrosserie de véhicule (10) selon l'une des revendications précédentes, **caractérisée en ce que** la couche de renfort (16) est constituée par un mat de fibres de verre.

6. Pièce de carrosserie de véhicule (10) selon l'une des revendications précédentes, **caractérisée en ce que** la couche de renfort (16) est traversée ou imprégnée par la matière plastique de la couche de matière plastique (14).

7. Pièce de carrosserie de véhicule (10) selon l'une des revendications précédentes, **caractérisée en ce que** la membrane extérieure (12) présente sur le côté intérieur, une autre couche de renfort supplémentaire (42) de préférence en un mat de fibres de verre, qui est traversée ou imprégnée par la matière plastique de la couche de matière plastique (14).

8. Pièce de carrosserie de véhicule (10) selon l'une des revendications précédentes, **caractérisée en ce que** la couche de matière plastique (14) appliquée par expansion alvéolaire sur le côté intérieur de la membrane extérieure (12), est constituée par une mousse de polyuréthanne formée d'un polyol et d'un isocyanate dans une proportion ou un rapport de mélange de 100 pour 150 à 100 pour 180.

9. Pièce de carrosserie de véhicule (10) selon l'une des revendications précédentes, **caractérisée en ce que** sur le côté intérieur de la couche de renfort (16) est fixé un habillage intérieur (26).

10. Pièce de carrosserie de véhicule (10) selon la revendication 9, **caractérisée en ce qu'**entre la couche de renfort (16) et l'habillage intérieur (26) est formée au moins une cavité (62) en tant qu'espace fonctionnel de la pièce de carrosserie de véhicule (10).

11. Pièce de carrosserie de véhicule (10) selon la revendication 9 ou 10, **caractérisée en ce que** l'habillage intérieur (26) présente deux couches de renfort (48, 50) espacées au moyen d'un élément d'espacement (46), l'élément d'espacement (46) et les couches de renfort (48, 50) étant traversés ou imprégnés par une matière plastique (52) pouvant être soumise à l'expansion alvéolaire.

12. Pièce de carrosserie de véhicule (10) selon la revendication 11, **caractérisée en ce que** l'élément d'espacement (46) de l'habillage intérieur (26) peut, au moins avant l'introduction de la matière plastique (52), être déformé au moins partiellement, par l'application d'une force prédéterminée.

13. Pièce de carrosserie de véhicule (10) selon la revendication 11 ou 12, **caractérisée en ce que** l'élément d'espacement (46) de l'habillage intérieur (26) est constitué par un mat de matière plastique alvéolaire ou de mousse de matière plastique, dont la structure alvéolaire ou cellulaire ouverte forme un réseau spatial irrégulier.

14. Pièce de carrosserie de véhicule (10) selon la revendication 13, **caractérisée en ce qu'**en ce qui concerne la matière plastique alvéolaire ou mousse de matière plastique de l'élément d'espacement (46) de l'habillage intérieur (26), il s'agit d'un polyuréthanne-polyester ayant subit une expansion alvéolaire par alimentation en azote.

15. Pièce de carrosserie de véhicule (10) selon l'une des revendications 11 à 14, **caractérisée en ce que** les couches de renfort (48, 50) de l'habillage intérieur (26) sont constituées chacune d'un mat de fibres de verre.

16. Pièce de carrosserie de véhicule (10) selon l'une des revendications 11 à 15, **caractérisée en ce que** la matière plastique (52) introduite dans l'élément d'espacement (46) et dans les couches de renfort (48, 50) de l'habillage intérieur (26), est constituée par une mousse de polyuréthanne formée d'un polyol et d'un isocyanate dans une proportion ou un rapport de mélange de 100 pour 50 à 100 pour 80.

17. Pièce de carrosserie de véhicule (10) selon l'une des revendications 11 à 16, **caractérisée en ce que** la matière plastique (52) de l'habillage intérieur (26) est mélangée à un additif renfermant un concentré d'arôme.

18. Pièce de carrosserie de véhicule (10) selon l'une des revendications 9 à 17, **caractérisée en ce que** l'habillage intérieur (26) présente sur le côté intérieur, une couche optique-haptique (56).

19. Pièce de carrosserie de véhicule (10) selon la revendication 18, **caractérisée en ce que** la couche optique-haptique (56) de l'habillage intérieur (26) est formée à la manière d'une structure en sandwich, par une couche souple de mousse de matière plastique ou de feutre (58) et une couche décorative (60).

20. Pièce de carrosserie de véhicule (10) selon la revendication 19, **caractérisée en ce que** la couche décorative (60) est constituée d'une nappe textile, de cuir, d'une imitation de cuir ou de cuir velours, ou bien d'une feuille de matière plastique décorative.

21. Pièce de carrosserie de véhicule (10) selon l'une des revendications 18 à 20, **caractérisée en ce qu'**entre la couche de renfort intérieure (50) et la couche optique-haptique (56) de l'habillage intérieur (26), est insérée une couche de barrage (54) sensiblement étanche aux liquides.

22. Pièce de carrosserie de véhicule (10) selon la revendication 21, **caractérisée en ce que** la couche de barrage (54) est constituée d'une mousse de polyéthylène à cellules ou alvéoles ouvertes.

23. Pièce de carrosserie de véhicule (10) selon l'une des revendications 9 à 22, **caractérisée en ce que** l'habillage intérieur (26) est perméable à la lumière et/ou à l'air.
